# EUROPEAN PATENT SPECIFICATION

(11) **EP 2 647 803 B1**
(45) Date of publication and mention of the grant of the patent: **26.11.2014**
(21) Application number: 12163408.3
(22) Date of filing: 05.04.2012
(51) Int. Cl.: F01N 3/20, F04B 53/08, F04B 13/00

(54) **Reagent dosing pump assembly with connector element**
Reagenzdosierpumpenanordnung mit Steckverbinderelement
Ensemble formant pompe de dosage de réactif avec élément connecteur

(43) Date of publication of application: 09.10.2013
(60) Divisional application: 14187069.1
(73) Proprietor: Delphi International Operations Luxembourg S.à r.l., 4940 Bascharage (LU)
(72) Inventor: Wright, Keith, Chatham, Kent ME5 7RS (GB); Needham, David, Maidstone, Kent ME17 2LA (GB)
(74) Representative: Neill, Andrew Peter

(56) References cited:
- EP-A1- 1 878 920
- JP-A- 2007 321 647
- US-A- 5 142 875
- US-A1- 2009 301 064

## Description

### Field of the invention

The present invention relates to a reagent dosing pump assembly with connector element. In particular, but not exclusively, the present invention relates to connector arrangements for dosing pump assemblies for use in a selective catalytic reduction system with cooling/heat exchange arrangements.

### Background to the Invention

It is known that exhaust gases from internal combustion engines contain substances which are harmful to the environment and which can pose a threat to public health. For many years, a sustained effort has been made within the automotive industry to reduce the release to the atmosphere of harmful substances carried in exhaust gases, both by modifying the combustion process itself to give a reduced yield of harmful combustion products, and by treating the exhaust gases before their emission into the atmosphere, for example by providing a catalyst to induce chemical breakdown of the harmful constituents, particularly the oxides of nitrogen (NO*ₓ*), into benign compounds.

One strategy for reducing NO*ₓ* emissions, known as selective catalytic reduction or SCR, involves the introduction of a reagent comprising a reducing agent, typically a liquid ammonia source such as an aqueous urea solution, into the exhaust gas stream. The reducing agent is injected into the exhaust gas upstream of an exhaust gas catalyst, known as an SCR catalyst, typically comprising a mixture of catalyst powders such as titanium oxide, vanadium oxide and tungsten oxide immobilised on a ceramic honeycomb structure. Nitrogen oxides in the exhaust gas undergo a catalysed reduction reaction with the ammonia source on the SCR catalyst, forming gaseous nitrogen and water. An example of an SCR system is described in the Applicant's European Patent Application Publication No. EP-A-2131020.

SCR systems typically include a reagent dosing pump assembly for delivering reagent to the exhaust gas stream. Examples of such pumps are described in the Applicant's European Patent Application Publication No. EP-A-1878920.

In one known reagent pump assembly, a solenoid-actuated pumping arrangement is provided to increase the pressure of the reagent, and the pump includes an atomising nozzle that receives the reagent from the pumping arrangement and delivers it from an outlet end into the exhaust gas stream. The nozzle is close-coupled to the pumping arrangement, so that the nozzle and the pumping arrangement form a single unit. The outlet end of the nozzle may be positioned directly in the exhaust gas stream, so that the pumping arrangement is located close to the outside of the exhaust pipe that conveys the exhaust gases.

It will be appreciated that, in such a case, the reagent dosing pump is exposed to the high temperatures that arise in the vicinity of the exhaust system, and so the reagent can be subjected to high temperatures, in use.

The maximum temperature at which urea-based reducing agents can be used is somewhat limited. Urea crystals tend to precipitate when the temperature of the solution is greater than approximately 70°C. Precipitation is undesirable because the precipitates can cause blockages in the delivery system, for example in the small-diameter outlets typically provided in the outlet end of the atomising nozzle. In addition, the formation of precipitates alters the concentration of the remaining solution, so that the effective quantity of ammonia delivered to the exhaust flow becomes uncertain. This could lead to inefficient catalysis and an insufficient reduction in NO*ₓ* emissions.

It is therefore desirable, in many cases, to provide cooling means to cool the reagent in an SCR system and, in particular, in the reagent dosing pump, to prevent overheating of the reagent. Furthermore, when solenoid-actuated pumping arrangements are used, it is also desirable to cool the solenoid coil since the performance of solenoid actuators can decrease at high temperatures.

In some arrangements, the reagent dosing pump of an SCR system may be mounted on the exhaust pipe under the body of a vehicle. Some cooling of the exhaust gases occurs as the gases flow from the engine to the location of the reagent dosing pump, which limits to a degree the temperature to which the reagent dosing pump, and hence the reagent, is exposed. In such arrangements, sufficient cooling of the reagent dosing pump may be possible by virtue of the cooling air-flow around the reagent dosing pump, and/or by providing suitable insulating means to reduce heat transfer from the exhaust pipe to the regent dosing pump.

In other arrangements, it is desirable to locate the reagent dosing pump in the engine compartment of the vehicle. In these cases, the reagent dosing pump is exposed to higher temperatures, due to the closer proximity of the dosing pump to the engine, and it is more difficult to provide a cooling air flow to the reagent dosing pump. Accordingly, the risk of the reagent overheating in use is higher than in an under-body arrangement.

The latest SCR reagent dosing systems (herein referred to as a "doser") require a coolant supply, a coolant outlet, and a reagent inlet (to the dosing system pump assembly) to be provided. Reagent in such dosing systems is transported to the doser via a pipe.

As noted above, due to high ambient temperature environments (for example within the engine bay near exhaust manifold) near and at the doser, the reagent feed pipe needs to be protected from heat to avoid boiling of the reagent. An additional and more extreme heating effect may also occur after ignition off (i.e. on engine shut down or during periods when the engine may be off such as in a Start-Stop energy efficient engine system), when coolant flow ceases and the heat soak effect from the nearby exhaust manifold and engine block means there is a large heat source. Additionally, in some environments (e.g. in northern latitudes) low ambient temperatures may be experienced requiring that the reagent pipe be protected from the cold and ideally provided with heat energy in the event that the reagent is frozen.

In known systems, connection of the two inlets (coolant fluid inlet and reagent fluid inlet) and one outlet (coolant fluid outlet) to the pump assembly have been by relatively large individual connectors. This represents a relatively bulky solution which may be incompatible with the production environment which can be tight and compact and subject to space constraints. Given such a lack of space, it can be difficult to screw individual connectors to the doser in a production embodiment (e.g. during manufacture or during in-service maintenance). Connectors can also be pressed or fitted by other suitable means.

It is therefore an object of the present invention to provide a connector element for connecting a pump assembly for use in a selective catalytic reduction system to a reagent supply of reagent fluid that overcome or substantially mitigate the above mentioned problems.
US application US20090301064 discloses a pump assembly as set in the preamble of claim 1.

### Summary of the Invention

According to a first aspect of the present invention there is provided a pump assembly for use in a selective catalytic reduction system, the pump assembly comprising: a pump housing; a jacket including a cavity for receiving the pump housing; first and second ports for cooling fluid; a reagent connector comprising a reagent passage for reagent fluid, the reagent connector being arranged to be in fluid communication with reagent inlet means of the pump housing wherein the pump assembly further comprises a heat exchange arrangement for cooling reagent fluid within at least a portion of the reagent passage.

The present invention provides a pump assembly for a selective catalytic reduction system in which the assembly comprises input and output ports for cooling fluid and a reagent connector element for receiving reagent for the pump. The reagent connector further comprises a cooling mechanism (heat exchange arrangement) for cooling the reagent as it enters the pump assembly.

Conveniently the cooling fluid may be arranged to be routed around at least the portion of the reagent passage to form the heat exchange arrangement. The pump assembly may further comprise a heat exchange block, the portion of the reagent passage (that is cooled by the heat exchange arrangement) being disposed within the heat exchange block.

Conveniently, the first port may be for coolant fluid that is supplied to the pump assembly and the first port may be located on the heat exchange block.

The heat exchange arrangement according to the invention comprises a flow guide arranged concentrically around the (cooled) portion of the reagent passage. In this arrangement the heat exchange arrangement comprises a wall and a first compartment for cooling fluid defined in part by the flow guide and in part by the wall; and a second compartment for cooling fluid defined in part by the flow guide and in part by a wall member of the reagent passage, the second compartment being in fluid communication with the first port, wherein the first compartment is in fluid communication with the second compartment. Furthermore, the first compartment may be in fluid communication with the cavity of jacket via a drilling and the second port may be formed in the jacket such that the first compartment may be in fluid communication with the second port.

In an alternative arrangement, the heat exchange arrangement may comprise a wall and the pump assembly may further comprise an extended chamber defined in part by the jacket and the pump housing and in part by the flow guide and by the wall; and a compartment for cooling fluid defined in part by the flow guide and in part by a wall member of the reagent passage, the compartment being in fluid communication with the first port wherein the extended chamber is in fluid communication with the compartment.

Preferably the heat exchange block may be integrally formed with the reagent inlet connector. The heat exchange block may also be integrally formed with the reagent inlet connector and the jacket.

In addition to a heat exchange arrangement within the reagent connector, the pump assembly may also comprise a further heat exchange arrangement located within the jacket for cooling the pump housing. Preferably both the heat exchange arrangement in the reagent connector and the further heat exchange arrangement may be arranged to use the same cooling fluid. In such an arrangement the cooling fluid from the heat exchange arrangement may be arranged to be transferred to the further heat exchange arrangement via a drilling within the pump assembly.

Where the pump assembly comprises a further heat exchange arrangement, the further heat exchange arrangement may comprise a flow guide disposed between the jacket and the pump housing; an inner compartment for cooling fluid defined in part by the flow guide and in part by the pump housing, the inner compartment being in fluid communication with the first port; and an outer compartment for cooling fluid defined in part by the flow guide and in part by the jacket; wherein the inner compartment is in fluid communication with the outer port by way of the second compartment.

According to a second aspect of the present invention there is provided a method of forming a pump assembly for use in a selective catalytic reduction system according to the first aspect of the present invention, the method comprising: forming the reagent inlet connector; overmoulding the heat exchange block and jacket over the reagent inlet connector wherein the reagent inlet is formed from a metallic material and the overmouldling is formed from a plastics material.

Preferred features of the first aspect of the present invention apply to the second aspect of the present invention.

### Brief description of the drawings

Embodiments of the present invention will now be described, by way of example only, with reference to the accompanying drawings, in which like reference numerals are used for like parts, and in which:
Figures 1-5 show a known reagent pump assembly compatible with embodiments of the present invention;
Figure 6 shows two perspective views of a pump assembly with integrated reagent connector element in accordance with a first embodiment of the present invention;
Figure 7 shows a side-view (vertical cross section) of the pump assembly of Figure 6;
Figure 8 shows a horizontal cross section of the pump assembly of Figure 6;
Figure 9 shows a side-view cross section of a pump assembly with integrated reagent connector element in accordance with a second embodiment of the present invention.

### Detailed description

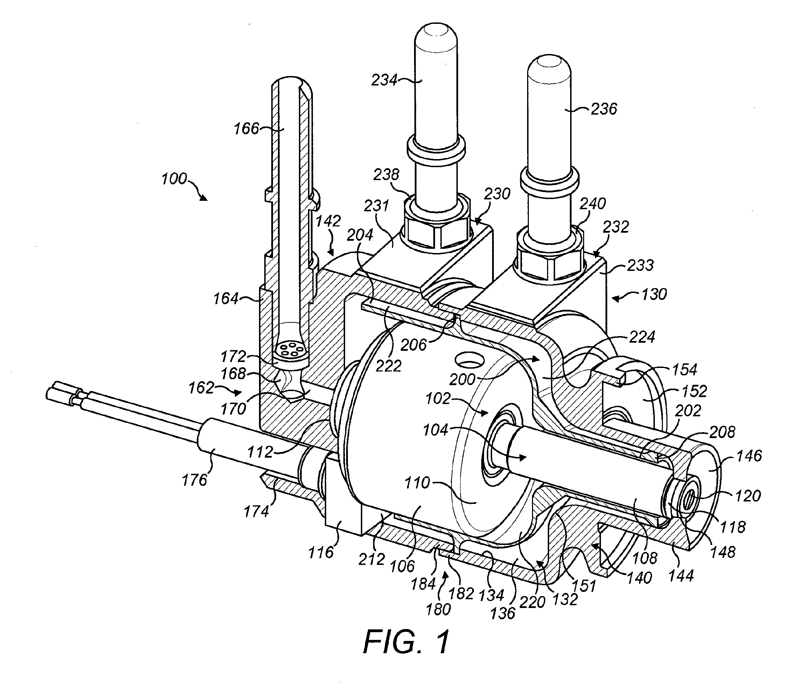

Like reference numerals are used below to denote like features. It is noted that the pump assembly is generally referenced as feature 100 in Figures 1 to 9 though it is appreciated that the arrangement of the pump assembly inlet and outlet ports and reagent port will vary to suit the various connector elements (300) being described.

It is noted that "AdBlue" is a commercially available urea-based reagent that may be used as the reagent in the embodiments of the invention described below. The cooling fluid (or coolant fluid) may be water.

A reagent pump assembly which is compatible with the above connector elements and arrangements in accordance with embodiments of the present invention is described below in relation to Figures 1 to 5.

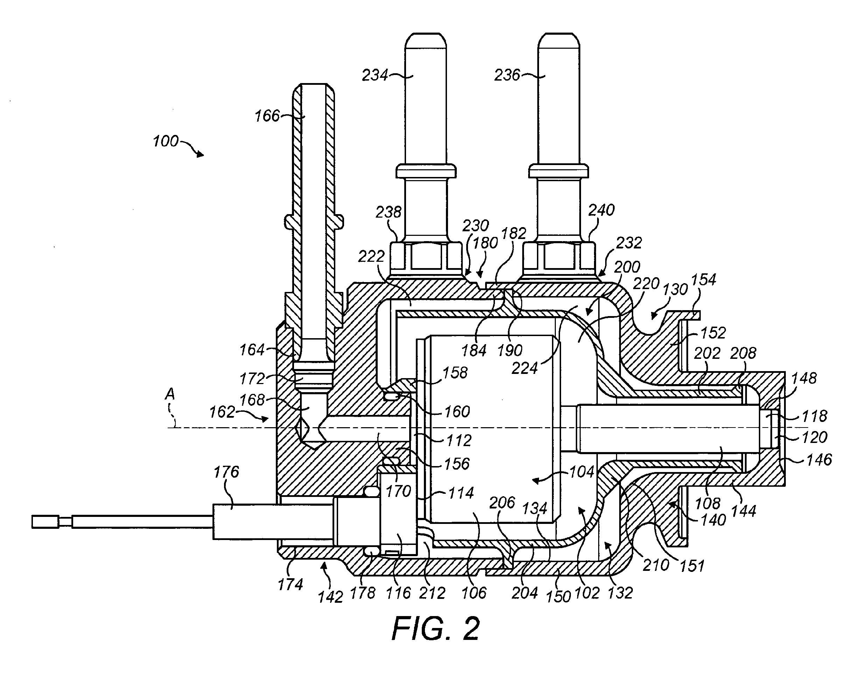

Referring first to Figures 1 and 2, the pump assembly 100 includes a reagent dosing unit with an integrated pump and nozzle arrangement, referred to hereafter as a reagent dosing pump 102. The pump 102 is a reagent dosing pump of any suitable type, for example as described in EP-A-1878920, to which reference can be made for further details of the pump 102.

The pump 102 comprises a pump housing 104 having a generally cylindrical pump body portion 106 that defines a pump axis (A in Figure 2), and a generally cylindrical nozzle portion 108 that extends from a first face 110 of the body portion 106 along the pump axis A. The nozzle portion 108 has a relatively small diameter compared to the body portion 106.

The body portion 106 of the pump housing 104 houses a pumping mechanism (not shown), such as a solenoid-actuated pumping mechanism. In use, the pumping mechanism receives reagent through a reagent inlet 112 provided on a second face 114 of the body portion 106, opposite the first face 110. An electrical connection point 116 is also located on the second face 114 of the body portion 106 (not visible in Figure 1), to provide an operating current to the solenoid actuator of the pumping mechanism. As is known from EP-A-1878920, the pumping mechanism includes a reciprocating pumping element, such as a plunger or piston, and is arranged to increase the pressure of a predefined quantity of reagent on each cycle of the pumping element.

The nozzle portion 108 of the pump housing 104 houses a delivery passage (not shown) that, in use, receives the pressurised reagent from the pumping mechanism, and conveys it to a reduced-diameter outlet end 118 of the nozzle portion 108. The outlet end 118 houses an atomising nozzle 120 that atomises the reagent as it exits the pump 102.

The pump assembly 100 also includes a jacket 130 having an internal cavity 132 in which the pump 102 is received. The cavity 132 is defined by an internal wall 134 of the jacket 130. In general terms, the shape of the cavity 132 is an enlarged version of the shape defined by the pump housing 104. In this way, the internal wall 134 of the cavity 132 is spaced from the pump housing 104 to define a volume 136 for cooling fluid therebetween.

The jacket 130 is a two-piece assembly, optionally made from cast stainless steel, comprising a first jacket part 140 that receives the nozzle portion 108 and a part of the body portion 106 of the pump housing 104, and a second jacket part 142 that receives a remaining part of the body portion 106.

The first jacket part 140 comprises a tubular portion 144 that extends along the pump axis A to receive part of the nozzle portion 108 of the pump housing 104. At one end, the tubular portion 144 is provided with an inwardly-directed flange 146 having a central aperture 148 that receives the reduced-diameter outlet end 118. The outlet end 118 is an interference fit in the aperture 148, and additionally may be laser welded or otherwise secured to the flange 146. The interface between the outlet end 118 and the flange 146 is fluid-tight, so as to seal the volume 136 for cooling fluid at the outlet end 118 of the pump 102.

The first jacket part 140 further comprises an enlarged-diameter portion 150 that extends along the axis A away from the outlet end 118 of the pump 102. The enlarged-diameter portion 150 receives a part of the body portion 106 of the pump housing 104, including the first face 110 of the body portion 106.

Adjacent to where the tubular portion 144 and the enlarged-diameter portion 150 of the first jacket part 140 meet, the jacket part 140 is provided with a mounting boss 152 in the form of an outwardly directed flange. In use, the mounting boss 152 is mounted to a port of an exhaust pipe or manifold (not shown), optionally with a sealing gasket, so that the atomising nozzle 120 is positioned in a suitable location for reagent to be dispensed into the exhaust gas stream. A locating tab 154 projects from the mounting boss 152 to engage with a corresponding locating recess (not shown) in the port, to ensure correct orientation of the pump assembly 100 with respect to the exhaust pipe, in use.

The second jacket part 142 is generally cup-shaped to enclose the end of the pump 102 opposite the outlet end 118. The second jacket part 142 therefore receives a part of the body portion 106 of the pump housing 104, including the second face 114 of the body portion 106.

A projection or land 156 extends axially from the internal wall 134 of the cavity 132 in the second jacket part 142 towards the outlet end 118 of the pump, to meet the inlet port 112 on the second face 114 of the housing pump body portion 106. A collar 158 (shown most clearly in Figure 2) is provided on the second face 114 of the pump body portion 106 that receives the land 156. An O-ring 160 is provided to create a fluid-tight seal between the collar 158 and the land 156.

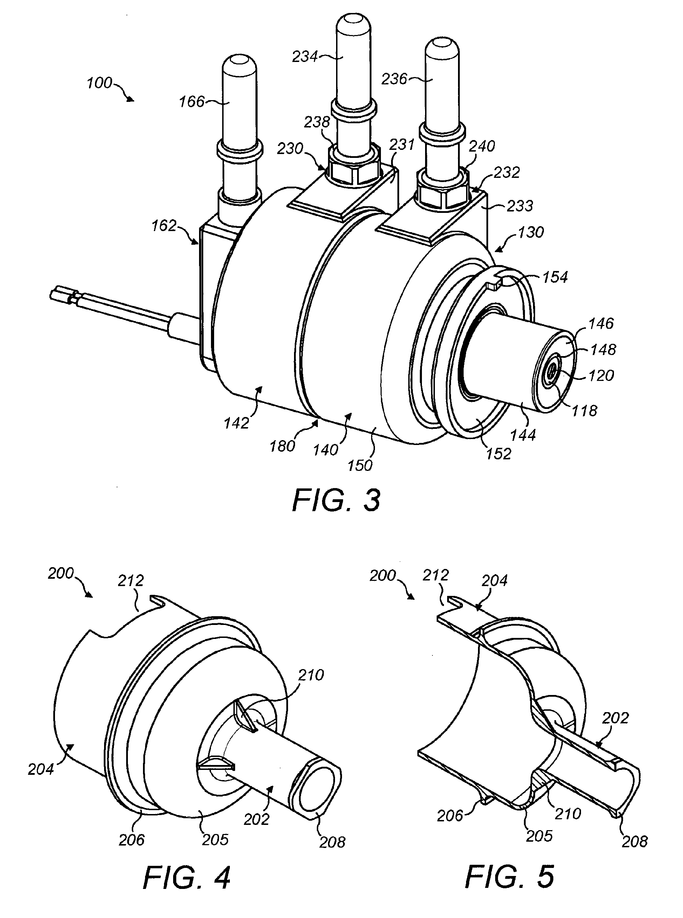

Referring additionally to Figure 3, the end of the second jacket part 142 remote from the outlet end 118 comprises a connection block 162 of generally cuboidal shape. A top face of the connection block 162 is provided with a reagent inlet port 164 that receives a tubular reagent inlet connector 166. The inlet connector 166 extends radially with respect to the pump axis A and is connected to a reagent supply line (not shown) in use.

As shown in Figures 1 and 2, the inlet port 164 of the connection block 162 is in fluid communication with the reagent inlet 112 of the pump 102 by way of first and second passages 168, 170 in the second jacket part 142. The first passage 168 extends radially inwards from the inlet port 164 of the connection block 162 to intersect the pump axis A, and the second passage 170 extends along the pump axis A from the first passage 168, through the connection block 162 and the land 156, to connect with the reagent inlet 112 of the pump 102. The seal provided by the O-ring 160 prevents leakage of reagent into the cooling fluid volume 136 between the land 156 of the second jacket part 142 and the collar 158 of the pump housing 104.

A filter 172 is located in the flow path between the inlet connector 166 and the reagent inlet 112 of the pump 102. In this example, the filter 172 is received in the inlet port 164. The filter 172 is conveniently a disc filter, arranged to prevent particulate contaminants in the reagent, such as urea crystals, from entering the pump 102.

The connection block 162 is also provided with a drilling 174 to admit an electrical connector 176. The electrical connector 176 connects with the electrical connection point 116 of the pump 102. A further O-ring 178 is provided to seal the electrical connector 176 in the drilling 174.

The first and second jacket parts 140, 142 meet at an annular overlapping joint 180. At the joint 180, a lip 182 of the first jacket part 140 is fitted over a corresponding lip 184 of the second jacket part 142. The joint 180 may be secured and sealed by suitable means, such as by laser welding or by providing an adhesive layer between the lips 182, 184.

As will now be described, the pump assembly 100 is arranged so that, in use, cooling fluid is caused to flow through the volume 136 defined between the internal wall 134 of the jacket 130 and the pump housing 104 in such a way that cooling of the pump 102 is optimised.

The pump assembly 100 includes a generally bell-shaped flow guide 200 mounted between the pump housing 104 and the jacket 130. The flow guide 200, which is shown in isolation in Figures 4 and 5, is open at both ends and comprises a tubular portion 202 that receives part of the nozzle portion 108 of the pump housing 104, and an enlarged-diameter portion 204 that receives the body portion 106 of the pump housing 104.

The enlarged-diameter portion 204 carries an outwardly-directed annular support or mounting flange 206 that is retained between the first and second jacket parts 140, 142 at the overlapping joint 180 to secure the flow guide 200 in position within the jacket cavity 132. As shown most clearly in Figure 2, the mounting flange 206 is engaged between the end of the second jacket part 142 closest to the outlet end 118 of the pump 102, and an internal shoulder 190 of the first housing part 140 defined where the lip 182 meets the remainder of the first housing part 140.

The tubular portion 202 of the flow guide 200 ends short of the outlet end 118 of the housing nozzle portion 108. As shown in Figures 4 and 5, four outwardly-extending support tabs 208 are provided around the periphery of the end of the tubular portion 202. When assembled, as shown in Figures 1 and 2, the support tabs 208 press against the cavity wall 134, to provide additional support for the flow guide 200 within the jacket cavity 132.

The flow guide 200 is conveniently made from an injection-moulded plastics material. To increase the rigidity of the flow guide 200, support ribs 210 are provided that extend from the tubular portion 202 to the enlarged-diameter portion 204 of the flow guide. A cut-out 212 is provided in the enlarged-diameter portion 204 to accommodate the electrical connection point 116 of the pump 102.

The dimensions of the flow guide 200 are such that there are clearances between the flow guide 200 and the pump housing 104 and between the flow guide 200 and the cavity wall 134, except for where the mounting flange 206 and the support tabs 208 engage with the jacket 130.

The mounting flange 206 is a close fit between the jacket parts 140, 142, so that fluid flow between the mounting flange 206 and the jacket 130 is prevented or at least substantially restricted. In contrast, relatively unrestricted fluid flow is possible around the end of the flow guide 200 where the support tabs 208 are provided, since fluid can flow through the gaps between the tabs 208.

The flow guide 200 divides the cooling fluid volume 136 into three compartments. A first or inner compartment 220 is defined in part by the pump housing 104 and in part by the innermost surface of the flow guide 200. The inner compartment 220 is therefore arranged concentrically around the pump housing 104.

The remainder of the cooling fluid volume 136 outside the inner compartment 220, between the flow guide 200 and the wall 134 of the cavity 132, is divided by the mounting flange 206 into an inlet compartment 222 and an outlet compartment 224, the inlet compartment 222 being farthest from the outlet end 118 of the pump 102, and the outlet compartment 224 being closest to the outlet end 118. The inlet and outlet compartments 222, 224 are each arranged concentrically around the inner compartment 220.

The inlet compartment 222 is defined in part by the outermost surface of the enlarged-diameter portion 204 of the flow guide 200 and in part by the cavity wall 134 in the second jacket part 142. The outlet compartment 224 is defined in part by the outermost surface of the enlarged-diameter portion 204 of the flow guide 200, in part by the outermost surface of the tubular portion 202 of the flow guide 200, and in part by the cavity wall 134 in the first jacket part 140.

The inlet compartment 222 is in fluid communication with the inner compartment 220 by way of the open end of the enlarged-diameter portion 204 of the flow guide 200, and the inner compartment 220 is in fluid communication with the outlet compartment 224 by way of the open end of the tubular portion 202 of the flow guide 200. Fluid flow between the inlet compartment 222 and the outlet compartment 224 is prevented or substantially restricted by the engagement of the mounting flange 206 with the jacket 130 at the overlapping joint 180.

An inlet port 230 and an outlet port 232 for cooling fluid are provided on the first and second jacket parts 140, 142 respectively. Each port 230, 232 comprises a passage or drilling (not shown) accommodated in a respective block 231, 233 provided on the circumference of each jacket part 140, 142. A tubular inlet connector 234 is received in the inlet port 230, and a tubular outlet connector 236 is received in the outlet port 232. The connectors 234, 236 are secured to the jacket 130 by retaining nuts 238, 240. In use, the inlet connector 234 is connected to a source of cooling fluid, such as the cooling water system of the engine, by way of a cooling fluid supply line, and the outlet connector 236 is connected to a return line for cooling fluid. Advantageously, the connectors 234, 236 are connected to the fluid lines by means of a press-fit or by suitable fittings provided at the ends of the fluid lines to mate with the connectors 234.

Each port 230, 232 communicates with the cooling fluid volume 136 within the jacket 130 by way of a respective passage (not shown) in the jacket 130. The passage from the inlet port 230 opens into the inlet compartment 222, and the passage from the outlet port 232 opens into the outlet compartment 224.

As shown most clearly in Figure 3, the inlet and outlet ports 230, 232 are arranged so that the cooling fluid flows into or out of the volume 136 in a direction substantially perpendicular to, and offset from, the pump axis A.

In other words, the inlet port 230 and its respective passage (not shown) are arranged so that fluid flows from the inlet connector 234 into the inlet compartment 222 along a flow axis that is perpendicular to, but does not intersect, the pump axis A. Instead, the flow axis is offset from the pump axis A and is generally tangential to the inlet compartment 222, so that fluid can flow relatively freely into the inlet compartment 222 and around the inlet compartment 222 in an annular manner without encountering obstacles in its flow path that would hinder the flow of fluid.

Likewise, the outlet port 232 and its respective passage (not shown) are arranged so that fluid flows from the outlet compartment 224 into the outlet connector 236 along a flow axis that is perpendicular to, but offset from, the pump axis A, and that is generally tangential to the outlet compartment 224. In this way, fluid can flow relatively freely around the outlet compartment 224 in an annular manner and out of the outlet compartment 224 without encountering flow-hindering obstacles.

To improve further the fluid flow through the cooling fluid volume 136 in use, both the wall 134 of the jacket cavity 132 and the surfaces of the flow guide 200 have smoothed or radiused corners and edges, in preference to sharp corners. For example, where the enlarged-diameter portion 150 meets the tubular portion 144 of the first jacket part 140, a radiused transition region 151 is provided to minimise the resistance to fluid flow in the outlet compartment 224. Similarly, where the enlarged-diameter portion 204 meets the tubular portion 202 of the flow guide 200, a radiused transition region 205 (see Figures 4 and 5) is provided.

In use, cooling fluid enters the pump assembly 100 through the inlet port 230, and flows first into the inlet compartment 222. The cooling fluid then flows into the inner compartment 220, where it passes between the flow guide 200 and the pump housing 104, where heat is transferred from the pump 102 to the cooling fluid. Once the fluid reaches the end of the tubular portion 202 of the flow guide 200, it passes out of the inner compartment 220 into the outlet compartment 224, passing first between the tubular portions 202, 144 of the flow guide 200 and the first jacket part 140 respectively, and then between the enlarged-diameter portions 204, 150 of the flow guide 200 and the first jacket part 140 respectively. The cooling fluid then passes out of the pump assembly 100 through the outlet port 232.

Because the inlet and outlet ports 230, 232 are arranged generally tangentially with respect to the inlet and outlet compartments 222, 224, the cooling fluid tends to flow in a helical flow path through the cooling fluid volume 136. Advantageously, this increases the time taken for fluid to pass through the pump assembly 100, therefore increasing the time available for heat transfer from the pump 102 to the fluid, in comparison to if the cooling fluid were to flow in a direction substantially parallel to the pump axis A.

By virtue of the flow guide 200, the cooling fluid is guided across substantially the whole of the surface of the pump housing 104 as it flows through the inner compartment 220.

Advantageously, therefore, the flow guide 200 ensures efficient transfer of heat from the pump 102 to the cooling fluid. Because the flow guide 200 extends towards the outlet end 118 of the pump 102, the flow guide 200 helps to ensure that the cooling fluid flows along the length of the nozzle portion 108 of the pump housing 104, thereby guarding against overheating of the reagent close to the atomising nozzle 120.

Furthermore, the pump body portion 106, which houses the heat-generating solenoid actuator, may require more cooling than the nozzle portion 108 of the pump housing 104. In this example, therefore, the arrangement of the flow guide 200 causes the cooling fluid to flow first past the pump body portion 106, and then past the nozzle portion 108 of the pump housing 104 before exiting through the outlet port 232. In this way, the cooling capacity of the cooling fluid flow is optimised.

As will be appreciated from Figure 3, the inlet port 230 and the outlet port 232 for cooling fluid are conveniently provided on the same side of the pump assembly 100, so that the inlet connector 234 and the outlet connector 236 extend parallel to one another. In addition, the flow guide 200 causes the cooling fluid to travel in a first direction parallel to the axis A towards the outlet end 118 of the pump 102 in the inner compartment 220, and then along a second direction that is antiparallel or opposite to the first direction. The cooling fluid is therefore returned towards the inlet port 230. Accordingly, the inlet port 230 and the outlet port 232, and their respective connectors 234, 236 can be positioned adjacent to one another.

In this way, the fluid supply and return lines (not shown) can be connected to the pump assembly 100 in a space-efficient manner, since they need only attach to one side of the pump assembly 100.

Similarly, the inlet connector 166 for reagent extends from the pump assembly 100 in the same direction as the inlet and outlet connectors 234, 236, so that the reagent supply line (not shown) can also be connected to the pump assembly 100 in a space-efficient manner.

Referring back to Figure 2, it will be appreciated that jacket 130 serves to clamp the pump housing 104 at each end. The outlet end 118 of the nozzle portion 108 of the housing 104 is retained in the aperture 148 in the flange 146 of the first jacket part 140, whilst the second face 114 of the body portion 106 of the housing 104 abuts the land 156 of the second jacket part 142. In this way, the jacket 130 serves to brace the pump housing 104 against any expansion or deformation along the pump axis A that could otherwise occur if reagent were to freeze inside the pump 102. The risk of mechanical failure of the pump housing 104 in such circumstances is therefore reduced, and in particular, the risk of the nozzle portion 108 being forced away from the body portion 106 is mitigated. The flange 146 may have a concave shape, as shown most clearly in Figure 1, to provide a high degree of resistance to movement of the nozzle portion 108 of the housing 104 away from the body portion 106.

It will be appreciated that many variations and modifications of the above described reagent pump assembly could be contemplated.

For example, the inlet compartment of the cooling fluid volume could be omitted, for instance by providing a flow guide that is truncated at the position of the mounting flange. In such a case, fluid could flow from the inlet port directly into the inner chamber, but the flow guide would still serve to ensure that the cooling fluid came into contact with substantially the whole surface of the pump housing.

By reversing the position of the inlet and outlet ports of the illustrated example of the invention, the cooling fluid would flow past the nozzle portion of the pump housing before the pump body portion. This could be desirable in some applications, for example where the nozzle portion is exposed to particularly high temperatures in use compared to the pump body portion, or where some heat can be dissipated from the pump assembly by air cooling or other means so that water cooling of only the nozzle portion is required.

The flow guide is conveniently provided as a separate component. However, in some examples, the flow guide form part of or is integral with the jacket, or forms part of or is integral with the pump housing. The flow guide may be formed as a single piece, as in the illustrated example, or may be formed from two or more parts that engage with one another or otherwise cooperate.

In the above-described example, the jacket is in two parts, which is convenient for manufacturing reasons. It will be appreciated, however, that the jacket could have any suitable alternative form. For example, a jacket formed from three or more pieces could be provided.

The arrangement of the inlet and outlet ports, the reagent inlet port, and the electrical connection to the pump actuator may be chosen to suit any particular application. For example, it would be possible to arrange the inlet and outlet ports at the same axial distance along the pump assembly, in which case the flow guide could include axially-extending ribs or baffles to divide the cooling fluid volume into suitable inlet and outlet compartments.

In the illustrated examples described above, the mounting flange of the flow guide separates the inlet and outlet compartments, and the body of the flow guide separates the inner compartment from both the inlet and outlet compartments. However, alternative ways of separating the compartments can be contemplated. For example, in other examples, the inlet and outlet compartments could be separated by an inwardly-directed flange or ridge provided on the jacket, or by a separate separating member such as an O-ring received on the flow guide.

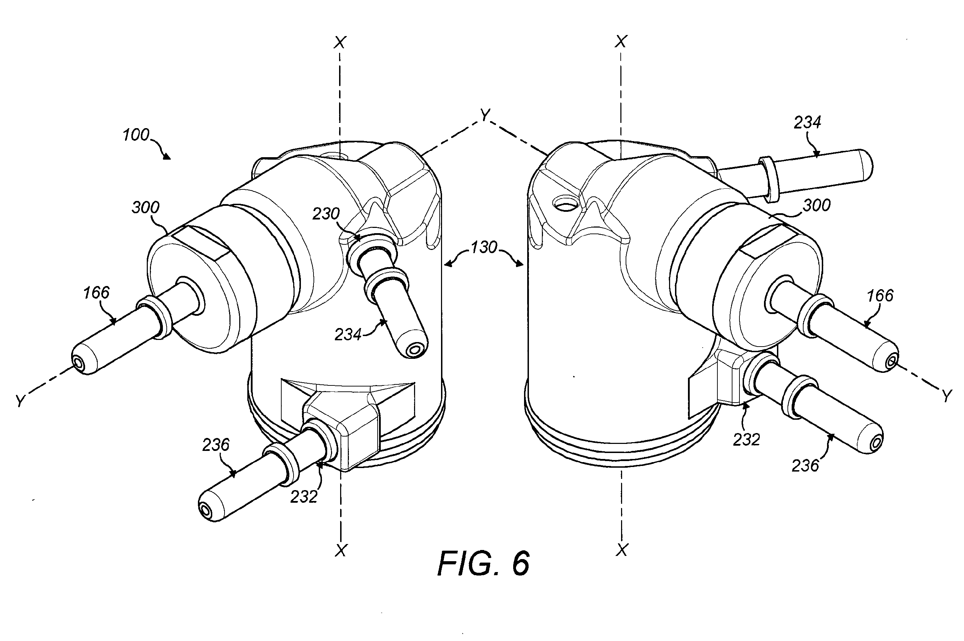

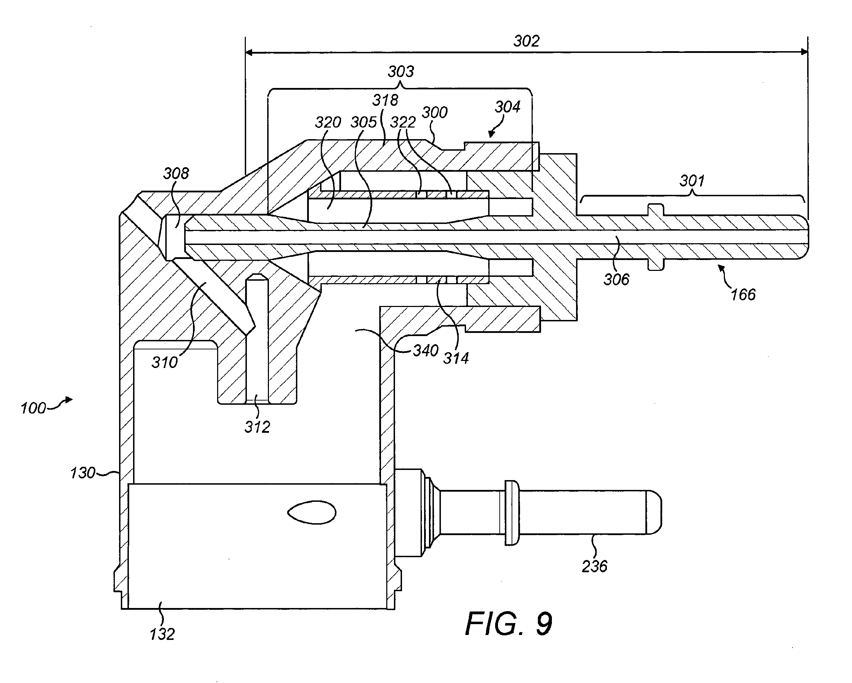

Figures 6 to 8 show a first embodiment of a pump assembly with reagent connector according to the present invention. Figure 9 shows a second embodiment of a pump assembly with reagent connector according to the present invention. Although not shown in Figures 6 to 9 a pump arrangement similar to that shown in Figure 2 is located within the jacket 130 of Figures 6 to 9. The flow guide 220 and coolant flow compartments of Figure 2 may also be incorporated within the embodiments shown in Figures 6 to 9 with appropriate adjustments to account for different positions of the reagent and coolant connectors compared to those shown in Figures 1 to 5. Axes A and X are considered to be the same axis.

Figure 6 shows two perspective views of a pump assembly in accordance with a first embodiment of the present invention. Like numerals have been used to denote like features. It can be seen that the arrangement of the coolant inlet and outlet and reagent inlet ports is different compared to the pump assembly of Figures 1 to 5.

In Figure 6 the pump assembly 100 defines an axis X and the reagent inlet connector defines an axis Y. In Figures 1 to 5 the inlet and outlet connectors 234, 236 and reagent connector 166 were parallel to one another. In Figure 6 it can be seen that the inlet connector 234 is at an angle relative to the reagent inlet connector 166 and outlet connector 236.

It is noted that although feature 234 of Figure 6 is described herein as a coolant inlet connector and feature 236 is described as a coolant outlet the flow of coolant fluid through the pump assembly 100 could be arranged to be reversed.

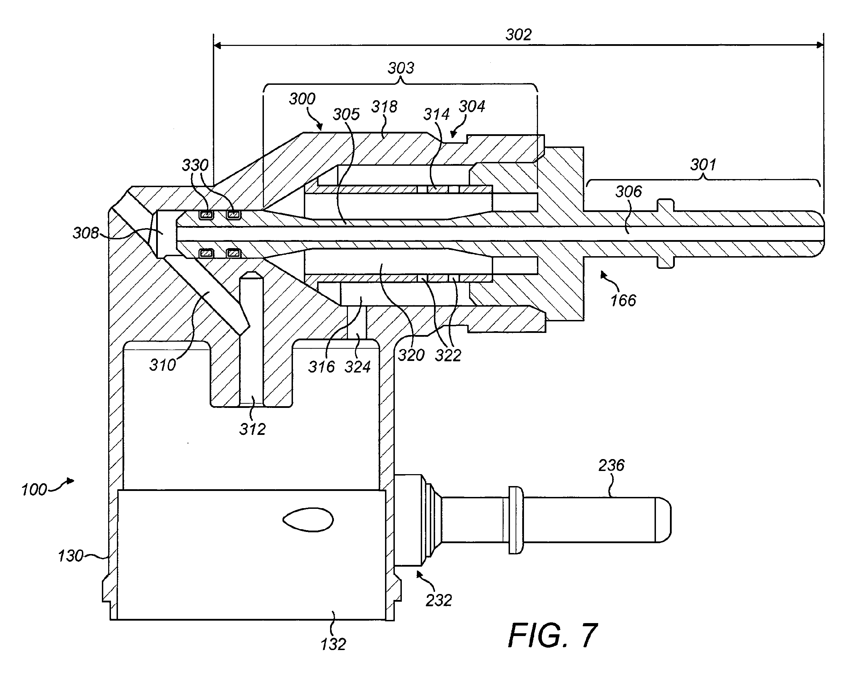

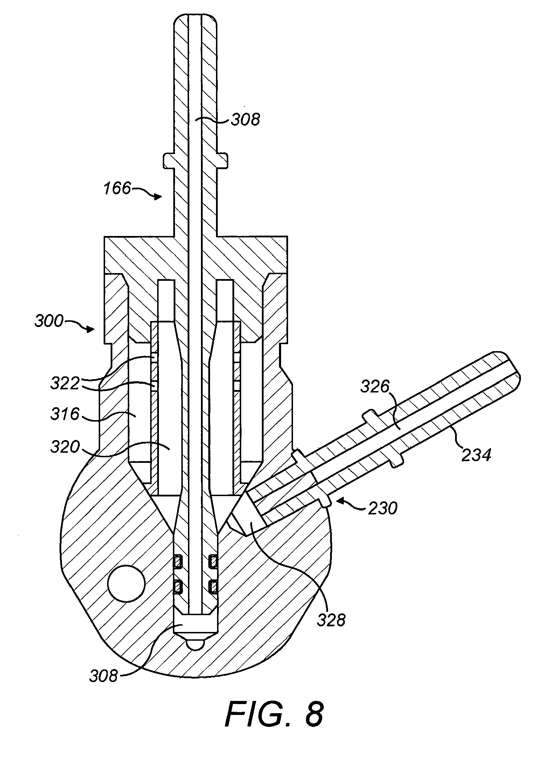

Returning to Figure 6, it is noted that the reagent inlet connector 166 is provided as a feature that is integrated with the pump assembly 100. The connector 166 is formed on a heat exchanger block 300 which is described more fully in relation to Figures 7 and 8. The heat exchanger block 300 comprises a heat exchanger arrangement that is operative in use to cool the temperature of incoming reagent fluid before it enters the pump within the pump assembly 100. In more extreme engine operating conditions the heat exchanger arrangement may operate to condense vaporised reagent before entering the pump within the pump assembly 100.

Figures 7 and 8 show two cross sections through the pump assembly arrangement of Figure 6.

Turning to Figures 7 and 8 the pump assembly comprises a reagent inlet arrangement 302 comprising a tubular reagent inlet connector 166, the heat exchange block 300 and a heat exchange arrangement 304 which is contained within the heat exchange block 300.

The reagent inlet connector 166 comprises a nozzle portion 301 and a cooled portion 303 disposed within the heat exchanger block 300.

Along the axis Y of the connector 166 is a reagent passage 306 for receiving reagent fluid from a reagent supply (not shown). The reagent passage 306 is defined in part by an axial passage within the nozzle portion 301 of the tubular reagent connector 166 and in part, by a reagent wall member 305 that forms the cooled portion 303 of the inlet connector within the heat exchange arrangement 304.

The reagent passage 306 opens out within the pump assembly 100 into a volume 308. The volume 308 is in fluid communication with a reagent inlet 112 (not shown in Figures 7 and 8 but shown in Figures 1 and 2) of the pump within the pump assembly by way of first and second passages 310, 312.

A flow guide 314 is arranged concentrically around the reagent wall member 305 within the heat exchange arrangement 304. A first compartment 316 is defined in part by the flow guide 314 and the wall 318 of the heat exchange arrangement 304. A second compartment 320 is defined in part by the flow guide 314 and the reagent wall member 305. The first and second compartments are arranged to be in fluid communication via a series of holes 322 drilled in the flow guide 314. The first compartment is additionally in fluid communication with the cavity 132 within the pump assembly by means of passage 324.

A coolant fluid passage 326 is defined along the axis of the coolant fluid connector 234. The coolant passage 326 opens out via a coolant inlet port 230 into a volume 328 adjacent the heat exchange arrangement 304 and which is in fluid communication with the second compartment 320.

In use, coolant fluid may be supplied down the fluid passage 326 to the second compartment 320 via the volume 328. Coolant fluid may then pass into the first compartment 316 via the holes 322 in the flow guide 314. Coolant fluid may then enter the cavity 132 via passage 324. During the flow of coolant fluid from the connector 324 to the cavity 132 heat is transferred from the reagent fluid within the reagent passage 306 to the coolant fluid. In this manner the reagent fluid may be cooled prior to entry into the pump within the pump assembly.

It is noted that the coolant fluid that enters the cavity 132 via passage 324 may be supplied to a cooling arrangement within the pump assembly as described in relation to Figures 1 to 5. In other words, passage 324 may be in fluid communication with an inlet compartment 222.

It is noted that O-rings 330 provide a fluid tight seal between the volume 308 and second compartment 320.

Figure 9 shows a second embodiment of a pump assembly with integrated reagent connector in which there is a single extended chamber 340 that extends from the cavity 132 of the pump assembly into the heat exchanger arrangement 304 in the reagent inlet arrangement 302. Operation of the second embodiment of the present invention is as described above in relation to Figures 7 and 8 though in the arrangement of Figure 9 cooling fluid is free to circulate through the heat exchange arrangement 304 into the pump 102 by means of the extended chamber 340.

In both embodiments of the present invention, the reagent inlet connector 166 (comprising the nozzle portion 301 and the reagent wall member 305 of the cooled portion 303) may be a single metallic component that is overmoulded with the flow guide 314, heat exchange block 300 and jacket 130. The overmoulded components may be made of plastic.

Further variations and modifications not explicitly described above may also be contemplated without departing from the scope of the invention as defined in the appended claims.

## Claims

1. A pump assembly (100) for use in a selective catalytic reduction system, the pump assembly comprising:
a pump housing (104);
a jacket (130) including a cavity (132) for receiving the pump housing (104);
first and second ports (232, 230) for cooling fluid;
a reagent connector (166) comprising a reagent passage (306) for reagent fluid, the reagent connector being arranged to be in fluid communication with reagent inlet means (112) of the pump housing (104), **characterized in that**
the pump assembly further comprises a heat exchange arrangement (304) for cooling reagent fluid within at least a portion (303) of the reagent passage (306) and wherein,
the heat exchange arrangement (304) comprises a flow guide (314) arranged concentrically around the portion (303) of the reagent passage (306) and wherein,
the heat exchange arrangement comprises a wall (318) and a first compartment (316) for cooling fluid defined in part by the flow guide (314) and in part by the wall (318); and a second compartment (320) for cooling fluid defined in part by the flow guide (314) and in part by a wall member (305) of the reagent passage (306), the second compartment (320) being in fluid communication with the first port (230), wherein the first compartment (316) is in fluid communication with the second compartment (320).

2. An assembly as claimed in Claim 1, wherein the cooling fluid is arranged to be routed around at least the portion (303) of the reagent passage to form the heat exchange arrangement.

3. An assembly as claimed in Claim 1 or Claim 2, further comprising a heat exchange block (300), the portion (303) of the reagent passage (306) being disposed within the heat exchange block (300).

4. An assembly as claimed in Claim 3, wherein the first port (230) is for coolant fluid that is supplied to the pump assembly and the first port is located on heat exchange block (300).

5. An assembly as claimed in any preceding claim, wherein the first compartment (316) is in fluid communication with the cavity (132) of jacket (130) via a drilling 324 and the second port (232) is formed in the jacket (130) such that the first compartment (316) is in fluid communication with the second port (232).

6. An assembly as claimed in any preceding claim, wherein the heat exchange arrangement (304) comprises a wall (318) and the pump assembly further comprises an extended chamber (340) defined in part by the jacket (130) and the pump housing (104) and in part by the flow guide (314) and by the wall (318); and a compartment (320) for cooling fluid defined in part by the flow guide (314) and in part by a wall member (305) of the reagent passage (306), the compartment (320) being in fluid communication with the first port (230) wherein the extended chamber (340) is in fluid communication with the compartment (320).

7. An assembly as claimed in any preceding claim, wherein the heat exchange block (300) is integrally formed with the reagent inlet connector (166).

8. An assembly as claimed in any preceding claim, wherein the heat exchange block (300) is integrally formed with the reagent inlet connector (166) and the jacket (130).

9. An assembly as claimed in any preceding claim, further comprising a further heat exchange arrangement located within the jacket for cooling the pump housing.

10. An assembly as claimed in Claim 9, wherein the heat exchange arrangement and further heat exchange arrangement are arranged to use the same cooling fluid.

11. An assembly as claimed in Claim 9 or Claim 10, wherein cooling fluid from the heat exchange arrangement is arranged to be transferred to the further heat exchange arrangement via a drilling 324.

12. An assembly as claimed in any one of Claims 9 to 11, wherein the further heat exchange arrangement comprises a flow guide (200) disposed between the jacket (130) and the pump housing (104);
an inner compartment (220) for cooling fluid defined in part by the flow guide (200) and in part by the pump housing (104), the inner compartment (220) being in fluid communication with the first port (230); and
an outer compartment (224) for cooling fluid defined in part by the flow guide (200) and in part by the jacket (130);
wherein the inner compartment (220) is in fluid communication with the outer port (232) by way of the second compartment (224).

## Patentansprüche

1. Pumpenbaugruppe (100) zur Verwendung in einem System für selektive katalytische Reduktion, wobei die Pumpenbaugruppe Folgendes umfasst:
ein Pumpengehäuse (104),
einen Mantel (130) mit einem Hohlraum (132) zur Aufnahme des Pumpengehäuses (104),
eine erste und eine zweite Öffnung (232, 230) für Kühlfluid,
einen Reagenzanschluss (166), der einen Reagenzdurchgang (306) für Reagenzfluid aufweist, wobei der Reagenzanschluss angeordnet ist, um mit einem Reagenzeinlassmittel (112) des Pumpengehäuses (104) in Strömungsverbindung zu stehen, **dadurch gekennzeichnet, dass**
die Pumpenbaugruppe ferner eine Wärmeaustauschanordnung (304) zum Kühlen von Reagenzfluid innerhalb wenigstens eines Teils (303) des Reagenzdurchgangs (306) aufweist, und wobei
die Wärmeaustauschanordnung (304) eine Strömungsleitvorrichtung (314) aufweist, die konzentrisch um den Teil (303) des Reagenzdurchgangs (306) angeordnet ist, und wobei
die Wärmeaustauschanordnung Folgendes aufweist: eine Wand (318) und eine erste Kammer (316) für Kühlfluid, die teilweise von der Strömungsleitvorrichtung (314) und teilweise von der Wand (318) definiert wird, und eine zweite Kammer (320) für Kühlfluid, die teilweise von der Strömungsleitvorrichtung (314) und teilweise von einem Wandelement (305) des Reagenzdurchgangs (306) definiert wirdwobei die zweite Kammer (320) mit der ersten Öffnung (230) in Strömungsverbindung steht, wobei die erste Kammer (316) mit der zweiten Kammer (320) in Strömungsverbindung steht.

2. Baugruppe nach Anspruch 1, wobei das Kühlfluid so angeordnet ist, dass es um wenigstens einen Teil (303) des Reagenzdurchgangs herum geleitet wird, um die Wärmeaustauschanordnung zu bilden.

3. Baugruppe nach Anspruch 1 oder Anspruch 2, die ferner einen Wärmeaustauschblock (300) aufweist, wobei der Teil (303) des Reagenzdurchgangs (306) in dem Wärmeaustauschblock (300) angeordnet ist.

4. Baugruppe nach Anspruch 3, wobei die erste Öffnung (230) für Kühlfluid ist, das der Pumpenbaugruppe zugeführt wird, und die erste Öffnung sich am Wärmeaustauschblock (300) befindet.

5. Baugruppe nach einem der vorhergehenden Ansprüche, wobei die erste Kammer (316) über eine Bohrung (324) mit dem Hohlraum (132) des Mantels (130) in Strömungsverbindung steht und die zweite Öffnung (232) in dem Mantel (130) ausgebildet ist, so dass die erste Kammer (316) mit der zweiten Öffnung (232) in Strömungsverbindung steht.

6. Baugruppe nach einem der vorhergehenden Ansprüche, wobei die Wärmeaustauschanordnung (304) eine Wand (318) aufweist und die Pumpenbaugruppe ferner einen erweiterten Raum (340), der teilweise von dem Mantel (130) und dem Pumpengehäuse (104) und teilweise von der Strömungsleitvorrichtung (314) und von der Wand (318) definiert wird, und eine Kammer (320) für Kühlfluid aufweist, die teilweise von der Strömungsleitvorrichtung (314) und teilweise von einem Wandelement (305) des Reagenzdurchgangs (306) definiert wird, wobei die Kammer (320) mit der ersten Öffnung (230) in Strömungsverbindung steht, wobei der erweiterte Raum (340) mit der Kammer (320) in Strömungsverbindung steht.

7. Baugruppe nach einem der vorhergehenden Ansprüche, wobei der Wärmeaustauschblock (300) mit dem Reagenzeinlassanschluss (166) einstückig ausgebildet ist.

8. Baugruppe nach einem der vorhergehenden Ansprüche, wobei der Wärmeaustauschblock (300) mit dem Reagenzeinlassanschluss (166) und dem Mantel (130) einstückig ausgebildet ist.

9. Baugruppe nach einem der vorhergehenden Ansprüche, die ferner eine weitere Wärmeaustauschanordnung aufweist, die sich zum Kühlen des Pumpengehäuses in dem Mantel befindet.

10. Baugruppe nach Anspruch 9, wobei die Wärmeaustauschanordnung und die weitere Wärmeaustauschanordnung zur Verwendung desselben Kühlfluids angeordnet sind.

11. Baugruppe nach Anspruch 9 oder Anspruch 10, wobei das Kühlfluid aus der Wärmeaustauschanordnung angeordnet ist, um über eine Bohrung (324) zu der weiteren Wärmeaustauschanordnung weitergeleitet zu werden.

12. Baugruppe nach einem der Ansprüche 9 bis 11, wobei die weitere Wärmeaustauschanordnung Folgendes aufweist: eine zwischen dem Mantel (130) und dem Pumpengehäuse (104) angeordnete Strömungsleitvorrichtung (200),
eine innere Kammer (220) für Kühlfluid, die teilweise von der Strömungsleitvorrichtung (200) und teilweise von dem Pumpengehäuse (104) definiert wird, wobei die innere Kammer (220) mit der ersten Öffnung (230) in Strömungsverbindung steht, und
eine äußere Kammer (224) für Kühlfluid, die teilweise von der Strömungsleitvorrichtung (200) und teilweise von dem Mantel (130) definiert wird,
wobei die innere Kammer (229) durch die zweite Kammer (224) mit der äußeren Öffnung (232) in Fluidkommunikation steht.

## Revendications

1. Ensemble formant pompe (100) destiné à être utilisé dans un système de réduction catalytique sélectif, l'ensemble formant pompe comprenant :
un carter de pompe (104) ;
une chemise (130) incluant une cavité (132) pour recevoir le carter de pompe (104) ;
un premier et un second orifice (232, 230) pour un fluide de refroidissement ;
un connecteur à réactif (166) comprenant un passage à réactif (306) pour un fluide réactif, le connecteur à réactif étant agencé de manière à être en communication fluidique avec un organe d'entrée de réactif (112) du carter de pompe (104),
**caractérisé en ce que**
l'ensemble formant pompe comprend en outre un agencement d'échange de chaleur (304) pour refroidir le fluide réactif dans au moins une portion (303) du passage à réactif (306), et dans lequel
l'agencement d'échange de chaleur (304) comprend un guide d'écoulement (314) agencé de manière concentrique autour de la portion (303) du passage à réactif (306), et dans lequel
l'agencement d'échange de chaleur comprend une paroi (318) et un premier compartiment (316) pour le fluide de refroidissement, défini en partie par le guide d'écoulement (314) et en partie par un élément de paroi (305) du passage à réactif (306), le second compartiment (320) étant en communication fluidique avec le premier orifice (230), dans lequel le premier compartiment (316) est en communication fluidique avec le second compartiment (320).

2. Ensemble selon la revendication 1, dans lequel le fluide de refroidissement est agencé pour être convoyé au moins autour de la portion (303) du passage à réactif pour former l'agencement d'échange de chaleur.

3. Ensemble selon la revendication 1 ou 2, comprenant en outre un bloc d'échange de chaleur (300), la portion (303) du passage à réactif (306) étant disposée à l'intérieur du bloc d'échange de chaleur (300).

4. Ensemble selon la revendication 3, dans lequel le premier orifice (230) est destiné au fluide de refroidissement qui est alimenté à l'ensemble formant pompe, et le premier orifice est situé sur le bloc d'échange de chaleur (300).

5. Ensemble selon l'une quelconque des revendications précédentes, dans lequel le premier compartiment (316) est en communication fluidique avec la cavité (132) de la chemise (130) via un perçage (324) et le second orifice (232) est formé dans la chemise (130) de telle façon que le premier compartiment (316) est en communication fluidique avec le second orifice (232).

6. Ensemble selon l'une quelconque des revendications précédentes, dans lequel l'agencement d'échange de chaleur (304) comprend une paroi (318) et l'ensemble formant pompe comprend en outre une chambre étendue (340) définie en partie par la chemise (130) et le carter de pompe (104), et en partie par le guide d'écoulement (314) et par la paroi (318) ; et un compartiment (320) pour le fluide de refroidissement, défini en partie par le guide d'écoulement (314) et en partie par un élément de paroi (305) du passage à réactif (306), le compartiment (320) étant en communication fluidique avec le premier orifice (230), dans lequel la chambre étendue (340) est en communication fluidique avec le compartiment (320).

7. Ensemble selon l'une quelconque des revendications précédentes, dans lequel le bloc d'échange de chaleur (300) est formé de manière intégrale avec le connecteur d'entrée à réactif (166).

8. Ensemble selon l'une quelconque des revendications précédentes, dans lequel le bloc d'échange de chaleur (300) est formé de manière intégrale avec le connecteur d'entrée à réactif (166) et avec la chemise (130).

9. Ensemble selon l'une quelconque des revendications précédentes, comprenant en outre un autre agencement d'échange de chaleur situé à l'intérieur de la chemise pour refroidir le carter de pompe.

10. Ensemble selon la revendication 9, dans lequel l'agencement d'échange de chaleur et l'autre agencement d'échange de chaleur sont agencés de manière à utiliser le même fluide de refroidissement.

11. Ensemble selon la revendication 9 ou 10, dans lequel le fluide de refroidissement provenant de l'agencement d'échange de chaleur est agencé pour être transféré à l'autre agencement d'échange de chaleur via un perçage (324).

12. Ensemble selon l'une quelconque des revendications 9 à 11, dans lequel l'autre agencement d'échange de chaleur comprend un guide d'écoulement (200) disposé entre la chemise (130) et le carter de pompe (104) ;
un compartiment intérieur (220) pour le fluide de refroidissement, défini en partie par le guide d'écoulement (200) et en partie par le carter de pompe (104), le compartiment intérieur (220) étant en communication fluidique avec le premier orifice (230) ; et
un compartiment extérieur (224) pour le fluide de refroidissement, défini en partie par le guide d'écoulement (200) et en partie par la chemise (130) ;
dans lequel le compartiment intérieur (220) est en communication fluidique avec l'orifice extérieur (232) à travers le second compartiment (224).
